# EUROPÄISCHE PATENTANMELDUNG

(11) **EP 2 138 340 A2**
(43) Veröffentlichungstag der Anmeldung: **30.12.2009**
(21) Anmeldenummer: 09007447.7
(22) Anmeldetag: 05.06.2009
(51) Int. Cl.: B60J 7/20

(54) **Vorrichtung zum wenigstens teilweisen Abdecken eines Verdeckablagebereiches eines Cabriolets**

(30) Priorität: 25.06.2008 DE 102008030198
(71) Anmelder: Wilhelm Karmann GmbH, 49084 Osnabrück (DE)
(72) Erfinder: Hilbk Holger, 49201 Dissen a.T.W. (DE); Wulf, Markus, 32479 Hille (DE); Maass, Joachim, 49143 Bissendorf (DE); Baumeier, Andreas, 49143 Bissendorf (DE)

(57) **Zusammenfassung**

Es wird eine Vorrichtung (20) zum wenigstens teilweisen Abdecken eines Ablagebereiches (15) eines Verdecks (3) eines Cabriolet-Fahrzeugs (1) vorgeschlagen, mit wenigstens einem Abdeckelement (33), welches wenigstens zwischen einer ersten, den Ablagebereich (15) bei offenem Verdeck (3) wenigstens bereichsweise und wenigstens annähernd horizontal abdeckenden Position und einer zweiten Position bei einer einen Fahrgastraum (5) des Cabriolet-Fahrzeugs (1) überdeckenden Position des Verdecks (3) verfahrbar ist. Dabei ist vorgesehen, dass das Abdeckelement (33) in der zweiten Position eine um eine Fahrzeugquerachse und ihren hinteren Randbereich (34) um maximal 90° verschwenkte Schrägstellung gegenüber der ersten Position einnimmt. Alternativ oder ergänzend ist vorgesehen, dass eine Steuereinrichtung (39) zur Bewegung des Abdeckelements (33) zwischen seiner ersten Position und seiner zweiten Position eine Antriebseinrichtung (37) derart ansteuert, dass das Abdeckelement (33) während einer Verdeckbewegung eine um eine Fahrzeugquerachse und seinen hinteren Randbereich (34) um maximal 120° verschwenkte Schrägstellung als dritte Position (P3) gegenüber der ersten Position (P1) einnimmt.

## Beschreibung

Die Erfindung betrifft eine Vorrichtung zum wenigstens teilweisen Abdecken eines Öffnungsquerschnittes eines Ablagebereichs eines Verdecks eines Cabriolet-Fahrzeugs mit wenigstens einem Abdeckelement nach der im Oberbegriff des Patentanspruches 1 bzw. 2 näher definierten Art.

Aus der DE 102 09 274 A1 ist eine Abdeckvorrichtung für den Verdeckkasten eines Fahrzeugs mit versenkbarer Dachkonstruktion bekannt. Die Dachkonstruktion ist dabei in den heckseitigen Verdeckkasten versenkbar, und der Verdeckkasten ist mit einem ersten und zweiten Abdeckteil verschließbar, wobei das erste Abdeckteil an dem Fahrzeug angelenkt ist. Das erste Abdeckteil ist zum Versenken der Dachkonstruktion aus seiner den Verdeckkasten teilweise abdeckenden Schließstellung in eine hinten hochgeklappte Öffnungsstellung überführbar. Das zweite Abdeckteil ist im Bereich des vorderen Randes des ersten Abdeckteils angelenkt und zum Schließen des Verdeckkastens aus seiner unterhalb des ersten Abdeckteils verborgenen Öffnungsstellung in eine nach vorne geklappte Schließstellung überführbar.

Wenn das zweite Abdeckteil hierbei in seiner unterhalb des ersten Abdeckteils verborgenen Öffnungsstellung angeordnet ist, ist sowohl der Stauraum unter dem Verdeckkastendeckel in Fahrzeughochrichtung als auch die zur Verfügung stehende Beladungsöffnung nachteilhafterweise durch das zweite Abdeckteil begrenzt. Das zweite Abdeckteil kann hierbei gegebenenfalls durch in dem Stauraum befindliches Staugut beschädigt werden.

Weiterhin erfordert eine in der DE 102 09 274 A1 beschriebene Anordnung des zweiten Abdeckteils in den verschiedenen Phasen bei Öffnen und Schließen der Dachkonstruktion nachteilhafterweise viel Zeit zur Bewegung des zweiten Abdeckteils.

Aus der DE 699 03 212 T2 ist eine mit den selben Nachteilen behaftete Gestaltung eines Kofferraums für ein Cabriofahrzeug mit zusammenfaltbarem Dach bekannt, wobei auch hier ein Kofferraumdeckel vorgesehen ist, der auch von vorne nach hinten für den Durchlass und das Verstauen des zusammengefalteten Daches geöffnet werden kann und der eine Ablageplatte zur Abdeckung eines Raumes zwischen einer Vorderkante des Kofferraumdeckels und einer den Kofferraum vorne begrenzenden Wand zumindest im geöffnetem Zustand des Daches abschließt. Um den Durchlass des zusammengefalteten Daches zu ermöglichen, ist die Ablageplatte an der Vorderkante des Kofferraumdeckels derart angelenkt, dass sie in einer zurückgeklappten Position annähernd an der Unterseite des Kofferraumdeckels anliegt.

Es ist Aufgabe der vorliegenden Erfindung, eine Vorrichtung zum wenigstens teilweisen Abdecken eines Ablagebereiches eines Verdecks eines Cabriolet-Fahrzeugs mit wenigstens einem Abdeckelement zu schaffen, wobei eine große Beladeöffnung bzw. eine großes Stauraumvolumen im Fahrzeugheck bereitgestellt wird und eine schnelle Verdeckschließ- und Verdecköffnungsbewegung ermöglicht wird.

Diese Aufgabe wird mit einer Vorrichtung zum wenigstens teilweisen Abdecken eines Ablagebereichs eines Verdecks eines Cabriolet-Fahrzeugs gemäß den Merkmalen des Patentanspruches 1 oder des Patentanspruches 2 gelöst.

Vorteilhafte Weiterbildungen einer Vorrichtung nach der Erfindung ergeben sich aus den Unteransprüchen.

Die Erfindung sieht somit eine Vorrichtung zum wenigstens teilweisen Abdecken eines Ablagebereichs eines Verdecks eines Cabriolet-Fahrzeugs mit wenigstens einem Abdeckelement vor, welches wenigstens zwischen einer ersten, den Ablagebereich bei offenem Verdeck wenigstens bereichsweise und wenigstens annähernd horizontal abdeckenden Position und einer zweiten Position bei einer einen Fahrgastraum des Cabriolet-Fahrzeugs überdeckenden Position des Verdecks verfahrbar ist.

Erfindungsgemäß ist dabei vorgesehen, dass das Abdeckelement in der zweiten Position eine um eine Fahrzeugquerachse und ihren hinteren Randbereich um maximal 90° verschwenkte Schrägstellung gegenüber der ersten Position einnimmt.

Alternativ oder ergänzend ist gemäß Anspruch 2 vorgesehen, dass eine Steuereinrichtung zur Bewegung des Abdeckelements zwischen seiner ersten Position und seiner zweiten Position eine Antriebseinrichtung derart ansteuert, dass das Abdeckelement während einer Verdeckbewegung eine um eine Fahrzeugquerachse und ihren hinteren Randbereich um vorzugsweise maximal 120° verschwenkte Schrägstellung als dritte Position gegenüber der ersten Position einnimmt.

Eine erfindungsgemäße Vorrichtung hat den Vorteil, dass eine erforderliche Bewegung des Abdeckelements bei einer Verdecköffnungs- bzw. Verdeckschließbewegung geringer als bei herkömmlichen Abdeckelementen ist. Mittels der Steuereinrichtung und deren Zusammenwirkung mit der Antriebseinrichtung kann ein Bewegungsablauf des Abdeckelements dabei vorteilhafterweise derart gesteuert werden, dass eine Verdecköffnungs- bzw. Verdeckschließbewegung sehr schnell durchgeführt wird.

Ein weiterer Vorteil der Erfindung liegt darin, dass bei einem sich in seiner zweiten Position befindlichen Abdeckelement eine zur Beladung des Ablagebereichs zur Verfügung stehende Beladeöffnung vorteilhafterweise groß ausgebildet ist und ein Beladen des Ablagebereichs einfach und komfortabel möglich ist, da nur ein Heckdeckel, der einen kombinierten Verdeckaufnahme- und Kofferraum abdeckt, um seine frontseitige Kante an der Fahrzeugkarosserie in Fahrzeughochrichtung verschwenkt werden muss.

Durch eine erfindungsgemäße Wahl des Winkels des Abdeckelements gegenüber der ersten Position bzw. dem Öffnungsquerschnitt des Ablagebereichs wird der Ablagebereich durch das Abdeckelement bei sich in einer geschlossenen Position befindlichem Heckdeckel durch das Abdeckelement nicht begrenzt und das Abdeckelement ist derart in dem Ablagebereich anordenbar, dass es gegenüber Beschädigungen durch ein Staugut vorteilhafterweise nicht anfällig ist.

In seiner zweiten Position kann das Abdeckelement dabei bezüglich einer senkrecht zu einem Fahrzeugboden durch die Anlenkung an dem Heckdeckel in Fahrzeugquerrichtung verlaufenden Ebene mit seinem freien, d. h. der Anlenkung abgewandten Ende in Fahrzeugfrontrichtung weisen, wobei je nach Anwendung eine zwischen den Extrempositionen einer horizontalen Anordnung wie bei einer herkömmlichen Hutablage und einer vertikalen Position liegende Schrägstellung als zweite Position gewählt sein kann.

Indem das Abdeckelement über eine Ansteuerung durch die Steuereinrichtung in eine gegenüber der ersten Position um bis zu 120° und gegenüber zweiten Position weiter in Fahrzeugheckrichtung verschwenkte dritte Position bewegbar ist, ergibt sich weiterhin der Vorteil, dass ein Kontakt des Abdeckelements mit einem hinteren Rand des Daches und/oder mit Karosserieelementen bei einem Hoch- oder Herabschwenken des Heckdeckels während einer Verdecköffnungs- oder Verdeckschließbewegung vorteilhafterweise vermieden werden kann.

In einer vorteilhaften Weiterbildung der Erfindung kann das Abdeckelement mittels einer Hebeleinrichtung an dem Heckdeckel angeordnet sein, so dass eine Bewegung des Abdeckelements gegenüber dem Heckdeckel in flexibler Weise durchführbar ist. In einer alternativen Ausbildung der Erfindung kann es auch vorgesehen sein, dass das Abdeckelement mittels eines Hilfsrahmens bzw. einer Rahmeneinrichtung an dem Heckdeckel angeordnet ist.

Bei einer Ausführung gemäß Anspruch 2 kann das Abdeckelement gegebenenfalls auch derart angelenkt und von der Steuereinrichtung angetrieben sein, dass das Abdeckelement in seiner zweiten Position wenigstens annähernd die erste Position bei geöffnetem Verdeck einnimmt, womit das Abdeckelement bei geschlossenem Verdeck wie eine herkömmliche Hutablage dienen kann und gegebenenfalls ansonsten benötigte Abdeckelemente zwischen einer Sitzhinterkante bzw. vorderen Ablageraumbegrenzung und einer Dachhinterkante bei geschlossenem Verdeck entfallen können.

Eine weitere Verkürzung eines Verdecköffnungs- bzw. Verdeckschließvorgangs kann in einer vorteilhaften Weiterbildung der Erfindung erreicht werden, wenn die Steuereinrichtung die Antriebseinrichtung zur Bewegung des Abdeckelements derart ansteuert, dass das Abdeckelement wenigstens teilweise zeitgleich mit einer Bewegung des Heckdeckels bewegt wird.

In einer einfachen Ausbildung der Erfindung kann die Antriebseinrichtung als ein Elektromotor ausgebildet sein, wobei der Elektromotor zur Bewegung des Abdeckelements zwischen seinen Positionen von der Steuereinrichtung angesteuert ist.

Um eine Kollision des Abdeckelements bei einer Überführung von seiner ersten Position in seine zweite Position zu vermeiden, kann in einer vorteilhaften Ausbildung der Erfindung eine mit der Steuereinrichtung zusammenwirkende Sensoreinrichtung vorgesehen werden, mittels welcher ein Bewegungsraum des Abdeckelements überwachbar ist.

Eine ebenfalls zur Kollisionsvermeidung dienende Maßnahme kann dadurch geschaffen werden, dass eine beispielsweise über einen Mikroschalter mit der Steuereinrichtung zusammenwirkende Abgrenzeinrichtung in dem Ablagebereich des Verdecks angeordnet ist, wobei die Steuereinrichtung die Antriebseinrichtung zur Bewegung des Abdeckelements nur ansteuert, wenn sich die Abgrenzeinrichtung bei geschlossenem Verdeck in einer den Ablagebereich abgrenzenden Position befindet.

Die Abgrenzeinrichtung kann hierbei beispielsweise mit einem Rollo ausgebildet sein, welches insbesondere zwischen einer eingefahrenen und einer im Wesentlichen parallel zu einer Fahrzeugbodenebene verlaufenden Position verfahrbar ist.

In einer vorteilhaften Ausbildung der Erfindung bildet das Abdeckelement bei geschlossenem Verdeck eine Hutablage. Das Abdeckelement kann hierbei im Wesentlichen einstückig, aber alternativ auch mehrteilig ausgebildet sein.

Die erfindungsgemäße Vorrichtung ist vorteilhafterweise sowohl bei Cabriolet-Fahrzeugen mit sogenannten Soft-Top-Verdecken mit einem flexiblen Verdeckbezug als auch bei Cabriolet-Fahrzeugen mit Hartschalenverdecken bzw. mit sogenannten RHTs (Retractable-Hard-Top) einsetzbar, wobei verschiedenartige Ablagemechanismen des Verdecks verwendet werden können.

Weitere Vorteile und vorteilhafte Ausführungen einer Vorrichtung nach der Erfindung ergeben sich aus der Zeichnung und der Beschreibung.

Nachfolgend ist ein vorteilhaftes Ausführungsbeispiel einer erfindungsgemäß ausgestalteten Vorrichtung anhand der Zeichnung prinzipmäßig beschrieben.

Es zeigt:
- Fig. 1: eine vereinfachte Seitenansicht eines Cabriolet-Fahrzeugs mit einem in Schließstellung gezeigten Verdeck und einem in Schrägstellung dargestellten Abdeckelement;
- Fig. 2: eine weitere der Fig. 1 entsprechende Seitenansicht des Cabriolet-Fahrzeugs bei geschlossenem Verdeck, wobei ein in dem heckseitigen Stauraum angeordnetes Rollo in einer den heckseitigen Stauraum parallel zu einem Fahrzeugboden begrenzenden Position dargestellt ist;
- Fig. 3: eine vereinfachte Seitenansicht des Cabriolet-Fahrzeugs der Fig. 2 wahrend einer ersten Phase einer Verdecköffnungsbewegung, in der das Abdeckelement in eine gegenüber der in den Figuren 1 und 2 dargestellten Position weiter in Fahrzeugheckrichtung liegende Position verschwenkt ist;
- Fig. 4: eine Seitenansicht des Cabriolet-Fahrzeugs der Figuren 1 bis 3 in einer weiteren Phase der Verdecköffnungsbewegung, wobei ein Heckdeckel mit dem gegenüber dem Heckdeckel verschwenkten Abdeckelement in einer einen heckseitigen Stauraum freigebenden Position ersichtlich ist;
- Fig. 5: eine Seitenansicht des Cabriolet-Fahrzeugs der Fig. 4 in einer gegenüber der Fig. 4 fortgesetzten Phase der Verdecköffnungsbewegung, wobei das Abdeckelement an dem Heckdeckel wieder in eine annähernd mit dem Heckdeckel fluchtende Position nach vorne geschwenkt ist;
- Fig. 6: das Cabriolet-Fahrzeug der Fig. 5 in einer anschließenden Phase der Verdecköffnungsbewegung, wobei das Verdeck in einer in dem heckseitigen Stauraum abgelegten Position gezeigt ist; und
- Fig. 7: eine den Figuren 1 bis 6 entsprechende Seitenansicht des Cabriolet-Fahrzeugs, wobei das Verdeck und der der Heckdeckel in einer Position bei vollständig geöffnetem Verdeck dargestellt ist.

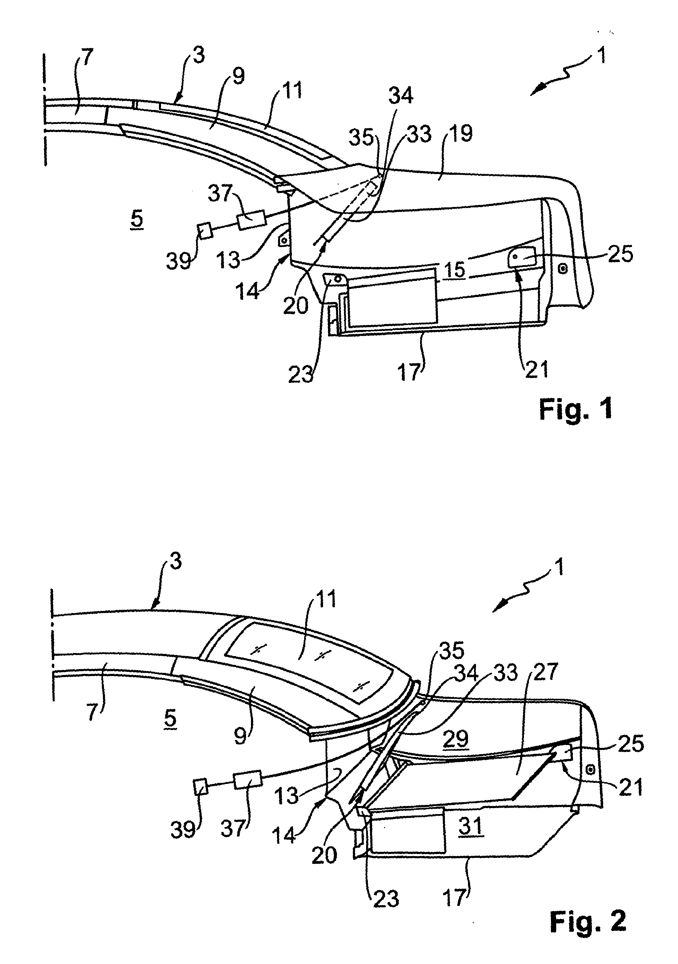

In den Figuren 1 bis 7 ist jeweils ein Ausschnitt eines Cabriolet-Fahrzeugs 1 mit einem Verdeck 3 ersichtlich, wobei mehrere Verdeckzustände während einer automatisierten Öffnungsbewegung des Verdecks 3 von einer einen Fahrgastraum 5 freigebenden Position in eine den Fahrgastraum 5 schließende Position dargestellt sind.

Das Verdeck 3, welches vorliegend als Hard-Top-Verdeck ausgebildet ist, ist mit einem in Fahrzeugfrontrichtung vorderen Dachsegment 7 und einem in Fahrzeugheckrichtung bei geschlossenem Verdeck 3 daran anschließenden hinteren Dachsegment 9 ausgebildet, wobei das hintere Dachsegment 9 eine Heckscheibe 11 aufweist.

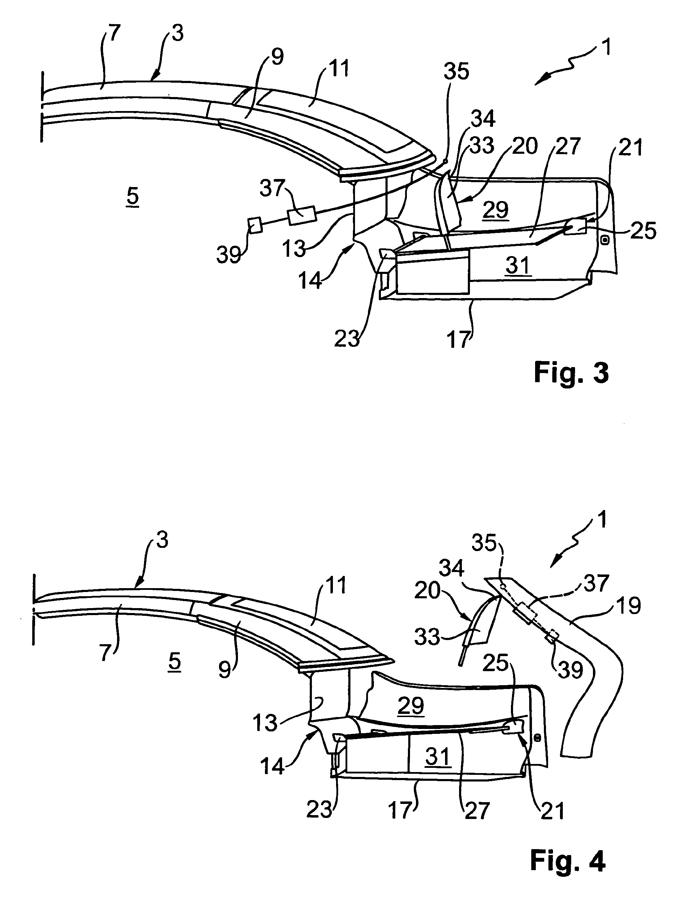

In einem bei geschlossenem Verdeck 3 fahrzeugheckseitigen Bereich des hinteren Dachsegments 9 ist eine Fahrzeugquerwand 13 einer Fahrzeugkarosserie 14 ersichtlich, welche eine in Fahrzeugfrontrichtung vordere Begrenzung eines als heckseitiger Stauraum 15 ausgebildeten Ablagebereichs bildet. Der heckseitige Staurauraum 15 wird in Fahrzeughochrichtung unten von einem Fahrzeugboden 17 und in Fahrzeughochrichtung oben und in Fahrzeugfrontrichtung hinten im Wesentlichen von einem vorliegend zugleich als Verdeckkastendeckel dienendem Heckdeckel 19 einer Abdeckvorrichtung 20 begrenzt, wobei der Heckdeckel 19 in der in der Fig. 1 dargestellten Position einen Öffnungsquerschnitt des heckseitigen Stauraums 15 bereichsweise abschließt. Der Heckdeckel 19 ist der Einfachheit halber in den Figuren 2 und 3 nicht dargestellt.

Es versteht sich, dass bei alternativen Ausführungen mit einem Verdeckkastendeckel und einem separaten Kofferraumdeckel die beschriebene Funktionalität der Abdeckvorrichtung auch bezüglich eines separaten Verdeckkastendeckels, welcher dann als "Heckdeckel" zu verstehen ist, realisierbar ist.

Der Heckdeckel 19 ist in einem fahrzeugheckseitigen Bereich an der Fahrzeugkarosserie 14 angelenkt, so dass der Heckdeckel 19 zwischen seiner beispielsweise in der Fig. 1 gezeigten, den heckseitigen Stauraum 15 abdeckenden Position und einer den heckseitigen Stauraum 15 freigebenden ersten Öffnungsposition bezüglich der gezeigten Darstellungen im Uhrzeigersinn verschwenkt werden kann.

Der Heckdeckel 19 ist ebenfalls in einem fahrzeugfrontseitigen Bereich schwenkbar an der Fahrzeugkarosserie 14 angelenkt, so dass der Heckdeckel 19 aus der beispielsweise in der Fig. 1 dargestellten, den heckseitigen Stauraum 15 abdeckenden Position in eine den heckseitigen Stauraum 15 freigebende, nicht näher dargestellte zweite Öffnungsposition verschwenkbar ist, wobei der Heckdeckel 19 hierbei bezüglich der gezeigten Darstellungen wie ein klassischer Kofferraumdeckel entgegen dem Uhrzeigersinn verschwenkt wird. Bei sich in der zweiten Öffnungsposition befindlichem Heckdeckel 19 ist der heckseitige Stauraum 15 somit zur einfachen Beladung von der Fahrzeugheckseite aus zugänglich.

Zum Abdecken des Öffnungsquerschnitts des heckseitigen Stauraums 15 fahrzeugfrontseitig des Heckdeckels 19 weist die Abdeckvorrichtung 20 ein auch als Hutablage bezeichnetes, vorliegend einstückiges Abdeckelement 33 auf, welches über eine Anlenkung 35 um eine Fahrzeugquerachse schwenkbar an dem Heckdeckel 19 angeordnet ist.

Zur Verschwenkung des Abdeckelements 33 um die Anlenkung 35 ist eine als Elektromotor 37 ausgebildete, nur schematisch dargestellte Antriebseinrichtung vorgesehen, welche von einer ebenfalls nur symbolisch dargestellten Steuereinrichtung 39 angesteuert wird.

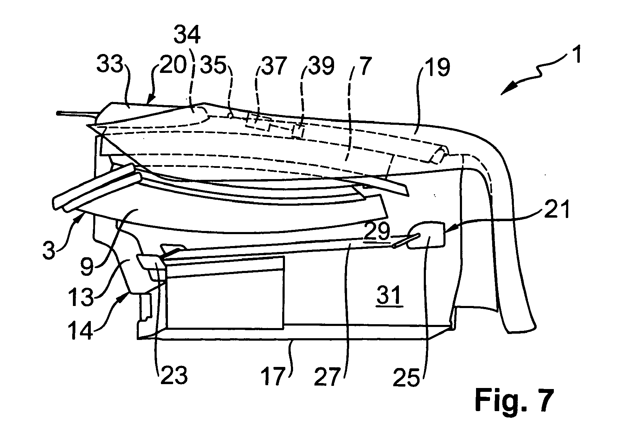

Das Abdeckelement 33 nimmt bei geöffnetem, d. h. vollständig abgelegtem Verdeck 3 eine in Fig. 7 näher dargestellte erste Position P1 ein, in welcher sich das Abdeckelement 33 von der Anlenkung 35 im Wesentlichen parallel zu dem Fahrzeugboden 17 in Fahrzeugfrontrichtung erstreckt.

Bei vollständig geschlossenem Verdeck 3, wie in Fig. 1 und Fig. 2 dargestellt, befindet sich das Abdeckelement 33 in einer gegenüber der ersten Position P1 um die Anlenkung 35 in Richtung des Fahrzeugbodens 17 verschwenkten zweiten Position P2, wobei das Abdeckelement 33 gegenüber der ersten Position P1 um einen Winkel von weniger als 90°, je nach Ausführung vorzugsweise zwischen 50° und 80°, um seinen hinteren Randbereich 34 verschwenkt ist.

Zur Überführung des Verdecks 3 aus der in Fig. 1 und Fig. 2 ersichtlichen Verdeckschließstellung in die in Fig. 7 dargestellte Verdecköffnungsstellung ist das Abdeckelement 33 durch eine Ansteuerung des Elektromotors 37 mittels der Steuereinrichtung 39 bewegbar.

Betrachtet man die in Fig. 1 gezeigte Ausgangssituation bei einer Verdecköffnungsbewegung, weist die Hutablage 33 bezüglich einer senkrecht zu dem Fahrzeugboden 17 durch die Anlenkung 35 verlaufenden Ebene mit ihrem der Anlenkung 35 abgewandten und somit freien Ende in Fahrzeugfrontrichtung.

Wie der Fig. 1 und Fig. 2 weiter zu entnehmen ist, ist in dem heckseitigen Stauraum 15 eine als Rolloeinrichtung 21 ausgebildete Abgrenzeinrichtung angeordnet, welche in einem fahrzeugfrontseitigen Bereich des heckseitigen Stauraums 15 ein vorderes Aufnahmeelement 23 und in einem fahrzeugheckseitigen Bereich des heckseitigen Stauraums 15 ein hinteres Aufnahmeelement 25 aufweist, wobei das vordere Aufnahmeelement 23 und das hintere Aufnahmeelement 25 in Fahrzeughochrichtung jeweils in etwa in einem mittleren Höhenbereich des heckseitigen Stauraums 15 angeordnet sind.

Die Rolloeinrichtung 21 weist ein Rollo 27 auf, welches als Gitter, Plane oder formstabile Jalousie ausgebildet sein kann und in ausgefahrenem Zustand - wie in Fig. 2 ersichtlich - zwischen dem vorderen Aufnahmeelement 23 und dem hinteren Aufnahmeelement 25 aufspannbar ist, um den heckseitigen Stauraum 15 in einen oberen Verdeckablageraum 29 und einen unteren Beladeraum 31 zu unterteilen.

Um eine Kollision mit in den Verdeckablageraum 29 eingreifenden Staugut bei der Verdeckablagebewegung zu unterbinden, ist ein nicht näher dargestellter Mikroschalter vorgesehen, mittels welchem eine Position des Rollos 27 detektierbar ist, wobei der Mikroschalter mit der Steuereinrichtung 39 derart zusammenwirkt, dass die Steuereinrichtung 39 eine Bewegung des Abdeckelements 33 und somit des Verdecks 3 nur freigibt, wenn sich das Rollo 27 der Rolloeinrichtung 21 in der den heckseitigen Stauraum 15 unterteilenden Position gemäß Fig. 2 befindet.

Zur weiteren Kollisionsabsicherung ist eine nicht näher dargestellte Sensoreinrichtung vorgesehen, mittels welcher insbesondere ein Bewegungsraum des Abdeckelements 33 in dem Verdeckablageraum 29 überwachbar ist. Die Sensoreinrichtung ist dabei an die Steuereinrichtung 39 angebunden, so dass eine Bewegung des Abdeckelements 33 bei einem von der Sensoreinrichtung detektierten Eingriff eines Stauguts in den Bewegungsraum des Abdeckelements 33 ein Bewegung des Abdeckelements 33 durch die Steuereinrichtung 39 unterbunden werden kann.

In Fig. 3 ist das Abdeckelement 33 in einer gegenüber seiner zweiten Position weiter in Fahrzeugheckrichtung um die Anlenkung 35 an seinem hinteren Randbereich 34 verschwenkten dritten Position gezeigt, in welcher das Abdeckelement 33 um bis zu 120° gegenüber der ersten Position P1 und derart gegenüber dem in Fig. 3 nicht dargestellten Heckdeckel 19 angeordnet ist, dass das Abdeckelement 33 bei einer Verschwenkung des Heckdeckels 19 um seine fahrzeugheckseitige Anlenkung an der Fahrzeugkarosserie 14 in der dargestellten Ansicht im Uhrzeigersinn in seine in der Fig. 4 gezeigt Position nicht mit dem hinteren Rand des Verdecks 3 kollidiert.

Der Verdeckablageraum 29 wird durch den sich in seiner ersten Öffnungsposition befindlichen Heckdeckel 19 zur Überführung des Verdecks 3 aus seiner geschlossenen Position in seine Ablageposition freigegeben, wobei das Abdeckelement 33 hierbei gegenüber dem Heckdeckel 19 im Wesentlichen den gleichen Winkel wie zu Beginn der Verschwenkung des Heckdeckels 19 gemäß Fig. 3 einnimmt.

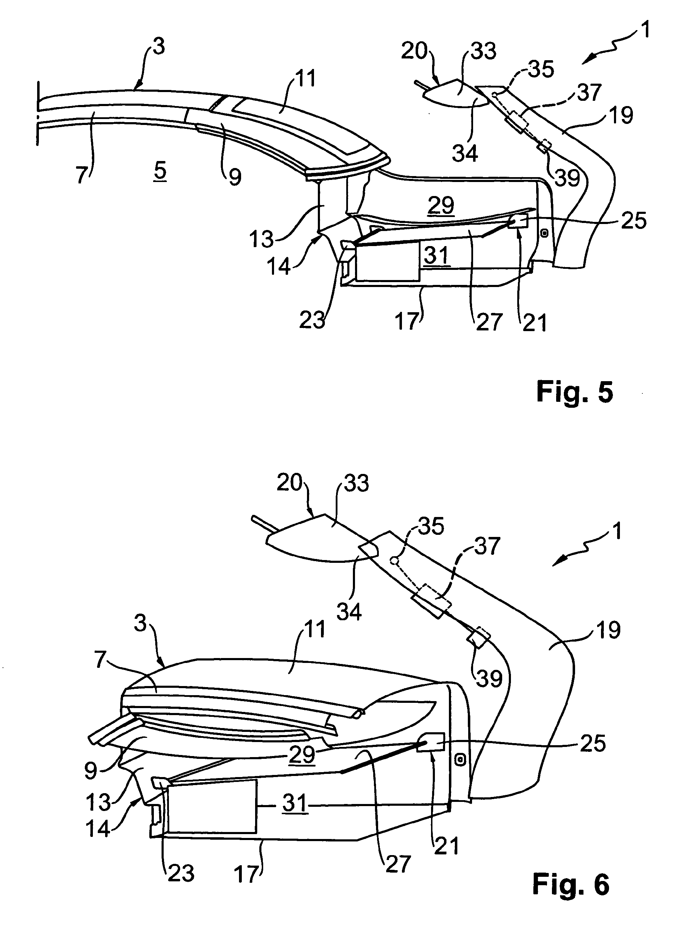

Bei fortgesetzter Öffnungsbewegung des Verdecks 3 wird das Abdeckelement 33, wie in der Fig. 5 dargestellt, durch eine Ansteuerung des Elektromotors 37 über die Steuereinrichtung 39 in eine Position verschwenkt, in der das Abdeckelement 33 im Wesentlichen eine gestreckten Winkel gegenüber dem Heckdeckel 19 aufweist und mit diesem an seiner Oberfläche fluchtet. Diese relative Position des Abdeckelements 33 gegenüber dem Heckdeckel 19 kann bereits der relativen Lage des Abdeckelements 33 gegenüber dem Heckdeckel 19 in der ersten Position des Abdeckelements 33, d. h. bei vollständig geöffnetem Verdeck 3, entsprechen.

In der Fig. 6 ist das Verdeck 3 in einer weiteren Phase der Verdecköffnungsbewegung gezeigt, in der sich das Verdeck 3 bereits in dem Verdeckablageraum 29 befindet. In diesem abgelegten Zustand des Verdecks 3 ist bei der gezeigten Ausführung das vordere Dachsegment 7 mit entgegengesetzter Orientierung zu dem hinteren Dachsegment 9 unterhalb des hinteren Dachsegments 9 mit der Heckscheibe 11 abgelegt. Die Stapelung des Verdecks kann jedoch in anderen Ausführungen auch abweichend vorgesehen sein.

In Fig. 7 ist eine der Fig. 6 entsprechende Darstellung des Cabriolet-Fahrzeugs 1 gezeigt, wobei das Verdeck 3 vollständig geöffnet ist.

Der Heckdeckel 19 ist in diesem Zustand um seine heckseitige Anlenkung gegenüber seiner Position in der Fig. 6 bezüglich der Fahrzeugkarosserie 14 in der vorliegenden Darstellung entgegen dem Uhrzeigersinn verschwenkt, so dass er zusammen mit dem Abdeckelement 33 den Verdeckablageraum 29 mit dem abgelegten Verdeck 3 in Fahrzeughochrichtung wenigstens annähernd horizontal begrenzt.

Zur Überführung des Verdecks 3 aus seiner offenen Position in seine geschlossene Position laufen die oben beschriebenen Schritte in umgekehrter Reihenfolge ab, wobei anzumerken ist, dass der Fachmann sowohl bei der Verdecköffnungsbewegung als auch bei der Verdeckschließbewegung Variationen zu der vorbeschriebenen Bewegung vorsehen kann und die Steuereinrichtung 39 entsprechend abweichend den Antrieb des Verdecks 3 und des Abdeckelements 33 steuern kann.

## Patentansprüche

1. Vorrichtung zum wenigstens teilweisen Abdecken eines Ablagebereiches (15, 29) eines Verdecks (3) eines Cabriolet-Fahrzeugs (1) mit wenigstens einem Abdeckelement (33), welches wenigstens zwischen einer ersten, den Ablagebereich (15, 29) bei offenem Verdeck (3) wenigstens bereichsweise und wenigstens annähernd horizontal abdeckenden Position (P1) und einer zweiten Position (P2) bei einer einen Fahrgastraum (5) des Cabriolet-Fahrzeugs (1) überdeckenden Position des Verdecks (3) verfahrbar ist,
**dadurch gekennzeichnet,**
**dass** das Abdeckelement (33) in der zweiten Position (P2) eine um eine Fahrzeugquerachse und ihren hinteren Randbereich (34) um maximal 90° verschwenkte Schrägstellung gegenüber der ersten Position (P1) einnimmt.

2. Vorrichtung zum wenigstens teilweisen Abdecken eines Ablagebereiches (15, 29) eines Verdecks (3) eines Cabriolet-Fahrzeugs (1), insbesondere nach Anspruch 1, mit wenigstens einem Abdeckelement (33), welches wenigstens zwischen einer ersten, den Ablagebereich (15, 29) bei offenem Verdeck (3) wenigstens bereichsweise und wenigstens annähernd horizontal abdeckenden Position (P1) und einer zweiten Position (P2) bei einer einen Fahrgastraum (5) des Cabriolet-Fahrzeugs (1) überdeckenden Position des Verdecks (3) verfahrbar ist,
**dadurch gekennzeichnet,**
**dass** eine Steuereinrichtung (39) vorgesehen ist, welche zur Bewegung des Abdeckelements (33) zwischen seiner ersten Position (P1) und seiner zweiten Position (P2) eine Antriebseinrichtung (37) derart ansteuert, dass das Abdeckelement (33) während einer Verdeckbewegung eine um eine Fahrzeugquerachse und seinen hinteren Randbereich (34) um maximal 120° verschwenkte Schrägstellung als dritte Position (P3) gegenüber der ersten Position (P1) einnimmt.

3. Vorrichtung nach Anspruch 1 oder 2,
**dadurch gekennzeichnet,**
**dass** das Abdeckelement (33) mittels einer Hebeleinrichtung an dem Heckdeckel (19) angeordnet ist.

4. Vorrichtung nach einem der Ansprüche 2 oder 3,
**dadurch gekennzeichnet,**
**dass** das Abdeckelement in seiner zweiten Position bei geschlossenem Verdeck wenigstens annähernd die erste Position bei geöffnetem Verdeck einnimmt.

5. Vorrichtung nach einem der Ansprüche 2 bis 4,
**dadurch gekennzeichnet,**
**dass** das Abdeckelement bei geschlossenem Verdeck eine Hutablage bildet.

6. Vorrichtung nach einem der Ansprüche 1 bis 5,
**dadurch gekennzeichnet,**
**dass** die Steuereinrichtung (39) die Antriebseinrichtung (37) derart ansteuert, dass das Abdeckelement (33) wenigstens teilweise zeitgleich mit einer Bewegung des Heckdeckels (19) bewegt ist.

7. Vorrichtung nach einem der Ansprüche 1 bis 6,
**dadurch gekennzeichnet,**
**dass** die Antriebseinrichtung (37) als ein Elektromotor ausgebildet ist, wobei der Elektromotor (37) zur Bewegung des Abdeckelements (33) zwischen seinen Positionen (P1, P2, P3) von der Steuereinrichtung (39) angesteuert ist.

8. Vorrichtung nach einem der Ansprüche 1 bis 7,
**dadurch gekennzeichnet,**
**dass** eine mit der Steuereinrichtung (39) zusammenwirkende Sensoreinrichtung vorgesehen ist, mittels welcher ein Bewegungsraum des Abdeckelements (33) überwachbar ist.

9. Vorrichtung nach einem der Ansprüche 1 bis 8,
**dadurch gekennzeichnet,**
**dass** eine mit der Steuereinrichtung (39) zusammenwirkende Abgrenzeinrichtung (21) in dem Ablagebereich (15, 29) des Verdecks (3) angeordnet ist, wobei die Steuereinrichtung (39) die Antriebseinrichtung (37) zur Bewegung des Abdeckelements (33) nur ansteuert, wenn die Abgrenzeinrichtung (21) bei geschlossenem Verdeck (3) eine den Ablagebereich (15) abgrenzende Position einnimmt.
